# EUROPEAN PATENT APPLICATION

(11) **EP 4 792 655 A1**
(43) Date of publication of application: **19.08.2026**
(21) Application number: 24877261.8
(22) Date of filing: 11.10.2024
(51) Int. Cl.: A23D 7/00, A23G 1/36

(54) **OIL-IN-WATER TYPE EMULSION COMPOSITION AND WATER-CONTAINING CHOCOLATE-LIKE FOOD CONTAINING SAME**

(30) Priority: 13.10.2023 JP 2023177304
(71) Applicant: Mitsubishi Chemical Corporation, Tokyo 100-8251 (JP)
(72) Inventor: TAKAHASHI, Eigo, Tokyo 100-8251 (JP); MATSUURA, Tsutashi, Tokyo 100-8251 (JP); AIBARA, Tomohiro, Tokyo 100-8251 (JP); MISHIMA, Shiori, Tokyo 100-8251 (JP)
(74) Representative: Ter Meer Steinmeister & Partner
(86) International application number: PCT/JP2024/036375
(87) International publication number: WO 2025/079667

(57) **Abstract**

An object of the present invention is to provide an oil-in-water emulsion composition usable in a dairy-free, water-containing chocolate-like food that does not contain dairy components (animal-derived raw materials), in which a rich chocolate flavor can be perceived because flavors derived from plant materials, such as almond and soybean raw materials, are absent, and which has physical properties (e.g., shape retention), and preferably further has flavor and taste (e.g., sweetness, body, and richness) and texture (e.g., melt-in-the-mouth feel and bite), equivalent or superior to those of water-containing chocolate using fresh cream. The oil-in-water emulsion composition of the present invention contains an emulsifier, a lauric oil or fat in which the content of lauric acid in the constituent fatty acids is 30 mass% or more, and water, wherein the mass ratio of the lauric oil or fat to water (lauric oil or fat/water) is in the range of 0.300 to 1.400, and the composition does not contain dairy components.

## Description

### Technical Field

The present invention relates to an oil-in-water emulsion composition for providing a water-containing chocolate-like food that does not contain dairy components (is dairy-free).

### Background Art

In dairy-containing products that occupy a large market in the field of confectionery foods, dairy products containing milk fat (such as milk, fresh cream, whole milk powder, concentrated milk, sweetened condensed milk, and unsweetened condensed milk) have conventionally been used; however, against the background of environmental and resource conservation, health considerations, cost advantages, and the like, development of techniques using plant-based milk (such as soy milk and almond milk) in place of dairy products has been advancing.

For example, in the field of Western confectionery, fresh cream is widely used for purposes such as imparting flavor, modifying texture, and modifying color tone, and water-containing chocolate obtained by kneading fresh cream into chocolate (so-called "nama chocolate") is one of the representative applications of fresh cream. Fresh cream is an oil-in-water emulsion emulsified by casein, which is a milk protein, and generally has a fat content of about 30 to 47 mass%. In contrast, many plant-based milks have a low fat content of 10 mass% or less, and in plant-based creams produced from plant-based milks, it may not be possible to sufficiently obtain the effects required when fresh cream is used.

With respect to producing dairy-free water-containing chocolate-like foods using soy milk or fat emulsions as substitutes for fresh cream, for example, the following techniques have been proposed.

Patent Literature 1 describes an oil-in-water emulsion containing 1 to 10% by weight of a seed or nut paste such as almond, having a total fat content of 10 to 50% by weight, optionally further containing a seed or nut oil derived from the same seed or nut as the seed or nut paste, wherein the total amount of oils and fats derived from the seed or nut paste and the seed or nut oil accounts for 50 to 100% by weight of the total fat content. Patent Literature 1 also describes that the oil-in-water emulsion may contain, as an emulsifier, lecithins in an amount of 0.5 to 2.5% by weight relative to the fat content, and that the proportion of lysolecithin among the lecithins may be 20 to 100% by weight. Patent Literature 1 states that, as described above, a plant-based oil-in-water emulsion having good emulsion stability can be obtained even without containing dairy components.

Patent Literature 2 describes a method for producing nama chocolate that includes a step of heating and melting a mass of chocolate; uniformly mixing therewith soy milk heated to approximately the same temperature and having a sugar content of 15 to 30 degrees, at a weight ratio of 10 to 70%; pouring the mixture into a mold container and cooling it to solidify it; cutting it into predetermined bite-size pieces; and sprinkling cocoa powder on the surfaces thereof.

Patent Literature 3 describes a water-containing chocolate-like food containing a soybean emulsion composition in which the lipid content (defined as the content of an extract obtained using a chloroform/methanol mixed solvent) is 100% by weight or more relative to the protein content.

Patent Literature 1 also describes that the soybean emulsion composition preferably has a protein content of 25% by weight or more on a dry matter basis, a lipid content of 100% by weight or more relative to the protein content, and an LCI (Lipophilic Proteins Content Index) value of 55% or more. The water-containing chocolate-like food described in Patent Literature 3 is considered to have a smooth melt-in-the-mouth feel, a rich and full-bodied flavor, and sufficient shape retention.

### Citation List

### Patent Literature

Patent Literature 1:JP 2022-152117 A
Patent Literature 2: JP 2005-224138 A
Patent Literature 3: JP 2014-113119 A

### Summary of Invention

### Technical Problem

Water-containing chocolate-like foods obtained by conventional techniques are not necessarily satisfactory in terms of physical properties, flavor, taste, and texture, and further improvement in quality is required. For example, conventional water-containing chocolate-like foods using soy milk or fat emulsions, such as those described in Patent Literature 1 to 3, have flavors from plant materials, and therefore differ in flavor and taste from water-containing chocolate using fresh cream.

An object of the present invention is to provide an oil-in-water emulsion composition for use in a dairy-free, water-containing chocolate-like food that does not contain dairy components (animal-derived raw materials), in which a rich chocolate flavor can be perceived because flavors derived from plant materials, such as almond and soybean raw materials, are absent, and which has physical properties (e.g., shape retention), and preferably further has flavor and taste (e.g., sweetness and body) and texture (e.g., melt-in-the-mouth feel and bite), equivalent or superior to those of water-containing chocolate using fresh cream.

### Solution to Problem

As a result of intensive studies conducted to solve the above problems, the present inventors found that an oil-in-water emulsion composition containing an emulsifier, a plant-derived lauric oil or fat, and water, in which the ratio of the lauric oil or fat to water is adjusted within a specific range and which does not contain dairy components (preferably does not contain proteins), is suitable as an oil-in-water emulsion composition for dairy-free chocolate-like foods, and that a water-containing chocolate-like food to which such an oil-in-water emulsion composition is added at a specific proportion can solve the above problems, thereby completing the present invention.

That is, in one aspect, the present invention provides an invention as described below.

### [Item 1]

An oil-in-water emulsion composition comprising an emulsifier, a lauric oil or fat in which the content of lauric acid in the constituent fatty acids is 30 mass% or more, and water,
wherein the mass ratio of the lauric oil or fat to water (lauric oil or fat/water) is in the range of 0.300 to 1.400, and
the composition does not contain dairy components.

### [Item 2]

The oil-in-water emulsion composition according to Item 1, wherein the mass ratio of the lauric oil or fat to water (lauric oil or fat/water) is in the range of 0.500 to 1.400.

### [Item 3]

The oil-in-water emulsion composition according to Item 1 or Item 2, wherein the oil-in-water emulsion composition is for use in a water-containing chocolate-like food.

### [Item 4]

The oil-in-water emulsion composition according to any one of Items 1 to 3, wherein the protein content is 1.0 mass% or less.

### [Item 5]

The oil-in-water emulsion composition according to any one of Items 1 to 4, wherein the emulsifier contains at least one of sucrose fatty acid esters, monoglycerides, organic acid monoglycerides, polyglycerol fatty acid esters, polyoxyethylene sorbitan fatty acid esters (polysorbates), and stearoyl lactylates.

### [Item 6]

The oil-in-water emulsion composition according to any one of Items 1 to 5, wherein the emulsifier is present in an amount of 0.01 to 20.00 mass% based on the total oil-in-water emulsion composition.

### [Item 7]

The oil-in-water emulsion composition according to any one of Items 1 to 6, wherein the emulsifier is a sucrose fatty acid ester having an HLB of 2 to 18.

### [Item 8]

The oil-in-water emulsion composition according to any one of Items 1 to 7, wherein the proportion of the lauric oil or fat in the total oils and fats is 50 mass% or more.

### [Item 9]

A water-containing chocolate-like food comprising the oil-in-water emulsion composition according to any one of Items 1 to 8 in the range of 10 to 45 mass%.

### [Item 10]

The water-containing chocolate-like food according to Item 9, wherein the viscosity at 5°C is 500 cP or more.

It should be noted that a person skilled in the art can convert the invention as described above into inventions of different categories. The invention according to the above "Item 3" can be converted, for example, into an invention relating to "use of an oil-in-water emulsion composition containing an emulsifier, a lauric oil or fat in which the content of lauric acid in the constituent fatty acids is 30 mass% or more, and water, wherein the mass ratio of the lauric oil or fat to water (lauric oil or fat/water) is in the range of 0.300 to 1.400, and which does not contain dairy components, in the production of a water-containing chocolate-like food." The invention according to the above "Item 9" can be converted, for example, into "a method for producing a water-containing chocolate-like food, comprising a step of adding the oil-in-water emulsion composition according to Item 1 in an amount in the range of 10 to 45 mass% based on the total food."

### Advantageous Effects of Invention

By using the oil-in-water emulsion composition of the present invention, it is possible to produce a dairy-free water-containing chocolate-like food in which flavors derived from plant materials do not interfere with the chocolate flavor, which has sufficient shape retention, and preferably further has texture (such as a smooth melt-in-the-mouth feel and bite) and flavor and taste (such as sweetness and body), equivalent or superior to that of water-containing chocolate using fresh cream. Such a dairy-free water-containing chocolate-like food can also be regarded as excellent from the viewpoints of reduced adhesiveness and prevention of syneresis, for example, in that adhesion to a knife is suppressed even when cut with a knife or the like, and sprinkled cocoa powder does not weep.

### Description of Embodiments

### - Oil-in-Water Emulsion Composition -

The oil-in-water emulsion composition of the present invention contains an emulsifier, a lauric oil or fat, and water, wherein the ratio of the lauric oil or fat to water (lauric oil or fat/water) is in a specific range, and the composition does not contain dairy components. The oil-in-water emulsion composition of the present invention preferably does not contain proteins. The oil-in-water emulsion composition of the present invention is preferably for use in a water-containing chocolate-like food.

### • Emulsifier

As the emulsifier in the present invention, commonly used or known food emulsifiers (excluding sodium caseinate, which is an emulsifier corresponding to a dairy component) can be used. Examples of such food emulsifiers include sucrose fatty acid esters, monoglycerides, organic acid monoglycerides (e.g., succinic acid monoglycerides and diacetyl tartaric acid monoglycerides), polyglycerol fatty acid esters, polyoxyethylene sorbitan fatty acid esters (polysorbates), sorbitan fatty acid esters, propylene glycol fatty acid esters, stearoyl lactylates (e.g., sodium stearoyl lactylate and calcium stearoyl lactylate), lecithin, lysolecithin (lecithin hydrolyzed by acid or enzymes), and saponins. These food emulsifiers may be used alone, or two or more thereof may be used in combination. In producing the oil-in-water emulsion composition of the present invention, from the viewpoints of ease of dispersion in water and ease of maintaining uniformity of the resulting composition, for example, sucrose fatty acid esters, monoglycerides, organic acid monoglycerides, polyglycerol fatty acid esters, polyoxyethylene sorbitan fatty acid esters (polysorbates), and stearoyl lactylates are preferred; sucrose fatty acid esters, organic acid monoglycerides, polyglycerol fatty acid esters, polyoxyethylene sorbitan fatty acid esters (polysorbates), and stearoyl lactylates are more preferred; and sucrose fatty acid esters are most preferred.

It should be noted that sucrose fatty acid esters, polyglycerol fatty acid esters, and organic acid monoglycerides are preferred from the viewpoint of bacteriostatic emulsifiers. The fatty acids constituting these bacteriostatic emulsifiers preferably have 14 or more carbon atoms, more preferably 16 or more carbon atoms, and preferably 22 or less carbon atoms, more preferably 18 or less carbon atoms. In particular, sucrose fatty acid esters and polyglycerol fatty acid esters in which the constituent fatty acids have 16 to 18 carbon atoms are suitable because they exhibit excellent bacteriostatic properties.

The monoester content of sucrose fatty acid esters and polyglycerol fatty acid esters is usually 50 mass% or more, preferably 60 mass% or more, and more preferably 70 mass% or more.

In polyglycerol fatty acid esters, the average degree of polymerization of polyglycerol is preferably 2 or more, preferably 5 or less, and more preferably 3 or less.

Specific examples of sucrose fatty acid esters include sucrose caprylate (fatty acid carbon number: 8; the same applies below), sucrose caprate (carbon number: 10), sucrose laurate (carbon number: 12), sucrose myristate (carbon number: 14), sucrose palmitate (carbon number: 16), sucrose stearate (carbon number: 18), sucrose oleate (carbon number: 18; number of double bonds: 1), sucrose behenate (carbon number: 22), sucrose erucate (carbon number: 22; number of double bonds: 1), and sucrose mixed fatty acid esters (e.g., mixed fatty acid esters of oleic acid, palmitic acid, and stearic acid). For example, sucrose palmitate (carbon number: 16) and sucrose stearate (carbon number: 18) are preferred as the sucrose fatty acid esters in the present invention, and these may be used each alone or in combination. Such sucrose fatty acid esters can be synthesized in accordance with known methods (for example, by transesterification between sucrose and a higher alcohol ester of a fatty acid); however, various brands (grades) of products having various fatty acid carbon numbers (and HLB (hydrophilic-lipophilic balance)) are also available, for example, as "RYOTO (registered trademark) Sugar Ester" manufactured by Mitsubishi Chemical Corporation.

The HLB of the sucrose fatty acid ester is preferably 2 to 18, more preferably 3 to 17, and still more preferably 4 to 16. When the HLB of the sucrose fatty acid ester falls within this range, shape retention, sweetness, body, melt-in-the-mouth feel, and bite equivalent or superior to those of water-containing chocolate using fresh cream can be obtained when the oil-in-water emulsion composition is added to a water-containing chocolate-like food as described below.

In the oil-in-water emulsion composition of the present invention, the amount of the emulsifier can be appropriately adjusted while taking into consideration the type and amount (ratio relative to water) of the lauric oil or fat, as well as the effects and the like of the present invention.

The amount of the emulsifier is, for example, based on the total oil-in-water emulsion composition, usually 0.01 to 20.00 mass%, preferably 0.05 to 15.00 mass%, more preferably 0.10 to 10.00 mass%, still more preferably 0.25 to 5.00 mass%, even more preferably 1.00 to 5.00 mass%, and most preferably 1.40 to 4.00 mass%.

The amount of the emulsifier in the oil-in-water emulsion composition can be calculated from the amount of the emulsifier added in the production process of the oil-in-water emulsion composition as described below; however, it can also be measured by analysis of the oil-in-water emulsion composition as a sample, for example, in accordance with a general method such as HPLC.

### • Lauric Oil or Fat

In the present invention, the term "lauric oil or fat" refers to an oil or fat in which the content of lauric acid (a saturated fatty acid having 12 carbon atoms) in all constituent fatty acids is 30 mass% or more, preferably 35 to 70 mass%, and more preferably 40 to 60 mass%. Examples of the lauric oil or fat include palm kernel oil and coconut oil, as well as fractionated oils thereof (e.g., soft fat fraction of palm kernel oil), hydrogenated oils (e.g., fully hydrogenated palm kernel oil), and interesterified oils. The lauric oil or fat may be used alone, or two or more thereof may be used in combination.

In the oil-in-water emulsion composition of the present invention, the amount of the lauric oil or fat is adjusted so as to fall within a specific range relative to water, in other words, so that the mass ratio of the lauric oil or fat to water (lauric oil or fat/water) falls within a specific range. The mass ratio of the lauric oil or fat to water can be further adjusted while taking into consideration the type of the lauric oil or fat and the effects and the like of the present invention; however, in the present invention, it is usually in the range of 0.300 to 1.400.

The lower limit value of the mass ratio of lauric oil or fat/water is preferably 0.500, more preferably 0.520, and still more preferably 0.530.

The upper limit value of the mass ratio of lauric oil or fat/water is preferably 1.300, more preferably 1.000, and still more preferably 0.900.

The amount of the lauric oil or fat in the oil-in-water emulsion composition can be calculated from the amount of the lauric oil or fat added in the production process of the oil-in-water emulsion composition as described below; however, it can also be measured by analysis of the oil-in-water emulsion composition as a sample, for example, in accordance with a general method such as HPLC. The amount of water in the oil-in-water emulsion composition can also be calculated from the amount of water added in the production process of the oil-in-water emulsion composition as described below; however, it can also be measured by analysis of the oil-in-water emulsion composition as a sample in accordance with a general method. The ratio of lauric oil or fat/water can be calculated based on such addition amounts, measured values, and the like.

### • Dairy Components

The "dairy components" not contained in the oil-in-water emulsion composition of the present invention include dairy components contained in general water-containing chocolate such as ganache or in conventional water-containing chocolate-like foods, namely, components derived from dairy products such as cream, butter, butter oil, cheese, concentrated milk, unsweetened condensed milk, unsweetened skim condensed milk, sweetened condensed milk, sweetened skim condensed milk, whole milk powder, skim milk powder, cream powder, whey powder, buttermilk powder, sweetened milk powder, fermented milk, fermented milk powder, milk crumb, milk block, and milk.

In the present invention, not containing "dairy components" means that the "milk solids (the total amount of milk fat and non-fat milk solids)" as defined in the Ministerial Ordinance Concerning Compositional Standards, etc. for Milk and Milk Products is 5 mass% or less. The content of milk solids can be determined by individually quantifying milk fat, milk proteins, lactose, and the like using general methods such as HPLC, and summing them.

### • Proteins

In a preferred embodiment, the oil-in-water emulsion composition of the present invention does not contain proteins. The "proteins" not contained include proteins derived from plant materials such as seed or nut pastes and soy milk that have been contained in conventional water-containing chocolate-like foods (for example, those described in Patent Literature 1 to 3 cited above) (excluding trace amounts of proteins that may be unavoidably mixed in lauric oils or fats or other refined raw materials). In a preferred embodiment, since the oil-in-water emulsion composition of the present invention does not contain proteins derived from plant materials, it is possible to eliminate the influence of plant materials on flavor and taste. As described above, since the oil-in-water emulsion composition of the present invention does not contain "dairy components," proteins derived from "dairy components" (typically casein) also naturally fall within the "proteins" that are not contained in the oil-in-water emulsion composition of the present invention in a preferred embodiment. By ensuring that proteins are not contained in the raw materials of the oil-in-water emulsion composition, it is possible to prevent a reduction in emulsion stability resulting from competition between the emulsifier and proteins, which hinders efficient interfacial adsorption, when the lauric oil or fat is finely dispersed by an emulsification treatment (e.g., high-pressure emulsification). The protein content in the oil-in-water emulsion composition of the present invention is usually 1.0 mass% or less, preferably 0.5 mass% or less, still more preferably 0.3 mass% or less, more preferably 0.1 mass% or less, and most preferably at or below the detection limit (substantially not contained). The protein content can be measured by general methods such as the Kjeldahl method.

### • Optional Components

The oil-in-water emulsion composition of the present invention may further contain, as necessary, components other than the emulsifier, the lauric oil or fat, and water, to the extent that the effects of the present invention are not impaired (excluding dairy components and preferably proteins). It should be noted that the "oil-in-water emulsion composition" in the present invention is a composition that should be distinguished from the "water-containing chocolate-like food" (food composition) described below, and refers to a composition in a state not mixed with chocolate dough; therefore, "chocolate dough" does not fall under the optional components.

Examples of optional components that can be contained in the oil-in-water emulsion composition of the present invention include pH adjusters such as organic acids, sodium bicarbonate, and phosphates. Further, to the extent that the effects of the present invention are not impaired, the following optional components can also be contained:
Sugars, including monosaccharides, oligosaccharides, and polysaccharides, such as sugar, fructose, glucose, maltose, galactose, mannose, fucose, xylose, trehalose, lactose, manno-oligosaccharides, malto-oligosaccharides, α-, β-, and γ-cyclodextrins, dextrin, indigestible dextrin, soybean polysaccharides, pectin, alginic acid, propylene glycol alginate, sodium carboxymethylcellulose, carrageenan, tamarind seed gum, tara gum, karaya gum, guar gum, locust bean gum, tragacanth gum, pullulan, gellan gum, native gellan gum, gum arabic, xanthan gum, agar, microcrystalline cellulose, fermented cellulose, chitosan, furcellaran, starch, modified starch, and inulin;
Sugar alcohols, such as erythritol, xylitol, maltitol, sorbitol, mannitol, and inositol;
Various sweeteners, such as sucralose, aspartame, acesulfame potassium, neotame, and stevia extracts;
Flavors, such as lemon oil, orange oil, and mint oil;
Pigments, such as carotenoids including β-carotene, astaxanthin, lycopene, and paprika pigment, and chlorophyll;
Flavoring materials, such as salt, magnesium chloride, magnesium oxide, magnesium carbonate, magnesium sulfate, bittern (crude seawater magnesium chloride), dolomite, coarse salt, magnesium stearate, magnesium hydrogen phosphate, trimagnesium phosphate, magnesium silicate, magnesium hydroxide, magnesium acetate, magnesium citrate, magnesium malate, magnesium benzoate, magnesium gluconate, magnesium L-glutamate, calcium hydrogen phosphate, calcium chloride, calcium sulfate, calcium oxide, calcined calcium, calcium carbonate, calcium citrate, calcium lactate, calcium hydroxide, sodium ferrous citrate, ferrous lactate, ferric chloride, heme iron, magnesium carbonate, trimagnesium phosphate, potassium gluconate, calcium gluconate, zinc gluconate, copper gluconate, coral calcium, shell powder, eggshell powder, sepiolite, talc, phytin, as well as materials obtained by using these as raw materials and either converting them into salts of other edible organic or inorganic acids, or powdering them using cyclodextrins, trehalose, or the like;
Mineral materials, such as calcium, iron, magnesium, potassium, phosphorus, and sodium;
Nutritional materials, such as vitamins, coenzyme Q10, amino acids, and peptides;
Antioxidants, such as vitamin C, vitamin E, rosemary extract, tea extract, and bayberry extract;
Shelf-life improvers, such as mustard extract and lysozyme;
Preservatives, such as nisin, sorbic acid, and salts thereof; and
Food materials, such as matcha, orange, strawberry, mango, coconut, mint, almond, pistachio, blueberry, yuzu, and Japanese pepper.

The oil-in-water emulsion composition of the present invention may also contain, to the extent that the effects of the present invention are not impaired, vegetable oils and fats other than lauric oils or fats (e.g., soybean oil, corn oil, cottonseed oil, rapeseed oil, sesame oil, perilla oil, rice oil, sunflower oil, peanut oil, olive oil, palm oil, rice germ oil, wheat germ oil, brown rice germ oil, job's tears oil, garlic oil, macadamia nut oil, avocado oil, evening primrose oil, safflower oil, camellia oil, castor oil, linseed oil, cocoa butter, and processed oils and fats such as refined products, fractionated products, hydrogenated products, hardened products, and interesterified products thereof, as well as MCTs (medium-chain triglyceride oils)).

However, in the oil-in-water emulsion composition of the present invention, the proportion of lauric oil or fat in the total oils and fats contained in the oil-in-water emulsion composition is preferably 50 mass% or more, more preferably 70 mass% or more, and still more preferably 90 mass% or more, and it is most preferred that the oil-in-water emulsion composition contains only lauric oil or fat as the oil or fat (only lauric oil or fat is used as a raw material and no other oils or fats are used).

### <Method for Producing Oil-in-Water Emulsion Composition>

The oil-in-water emulsion composition of the present invention can be produced by performing an emulsification treatment using predetermined amounts of an emulsifier, a lauric oil or fat, and water in accordance with general methods. Generally, an oil phase is first prepared by mixing an emulsifier and a lauric oil or fat (and, if necessary, other raw materials, such as pH adjusters), water (or an aqueous phase in which other raw materials are dissolved, if necessary) is then added to this oil phase, and after heating, an emulsification treatment using an emulsifying apparatus is performed.

Examples of the emulsifying apparatus include high-pressure emulsifiers (high-pressure homogenizers), paddle mixers, homo mixers, ultrasonic homogenizers, colloid mills, kneaders, inline mixers, static mixers, and onlators. The emulsification treatment may be performed, for example, using a high-pressure emulsifier that emulsifies under high-pressure conditions, and, if necessary, pre-emulsification performed under low-pressure or atmospheric-pressure conditions using a paddle mixer or the like may be performed prior thereto.

The conditions for the emulsification treatment (e.g., processing rate, number of treatments or number of stages, pressure, temperature, and pH) can be appropriately set in consideration of processing efficiency and the like. For example, the temperature of the emulsification treatment is usually 30°C or more, preferably 40°C or more, more preferably 50°C or more, and usually 100°C or less, preferably 90°C or less, more preferably 80°C or less. The pH of the raw materials (mixture) of the oil-in-water emulsion composition subjected to the emulsification treatment is usually 5.0 or more, preferably 6.0 or more, and usually 9.0 or less, preferably 8.0 or less.

The method for producing the oil-in-water emulsion composition can also include, as necessary, steps other than the step of performing the emulsification treatment as described above (emulsification step). For example, when the oil-in-water emulsion composition is stored for a certain period of time prior to use, the production method preferably includes a step of performing a sterilization treatment (sterilization step) before or after the emulsification step, preferably after the emulsification step. The method and conditions (such as temperature and time) for the sterilization treatment can be appropriately selected and set. The sterilization treatment can be performed, for example, under conditions of 60 to 99°C for 1 to 120 minutes, and in the case of UHT sterilization, sterilization at 110 to 150°C, corresponding to a sterilization value (F0) at 121°C of 0.5 to 30, is preferably performed.

The oil-in-water emulsion composition of the present invention obtained by the production method as described above is usually in a liquid form; however, it can also be converted into a powder by a general method to obtain a powdered form. As methods for powdering, for example, spray drying, airflow drying, drum drying, cylinder drying, vacuum freeze-drying, vacuum drying, and the like can be used, and the conditions thereof can be appropriately set. When powdering, an appropriate powder base, for example, a starch hydrolysate, may be used.

As with general oil-in-water emulsion compositions, the oil-in-water emulsion composition of the present invention can be used, for example, in the production of seasonings, confectionery, bakery products, and the like; however, it is preferably used in the production of the water-containing chocolate-like foods as described below.

### - Water-Containing Chocolate-Like Food -

The water-containing chocolate-like food of the present invention contains the oil-in-water emulsion composition of the present invention within a specific range.

In the present invention, the term "water-containing chocolate-like food" refers to a food in which the "cream" (a dairy product) has been replaced with the oil-in-water emulsion composition of the present invention in ganache, that is, a food containing a liquid product prepared by mixing and emulsifying heated fresh cream with so-called chocolate (which may be "chocolate dough" or "quasi-chocolate dough" as defined below) to obtain a smooth creamy form, or a solidified product obtained by cooling the liquid product. In other words, the water-containing chocolate-like food of the present invention refers to a food that is the same as ganache (and a solidified product thereof), except that it contains the oil-in-water emulsion composition of the present invention instead of "cream" (a dairy product).

The "water-containing chocolate-like food" of the present invention is preferably a food that falls under any of the following categories defined in the "Fair Competition Code on Labeling of Chocolate Products" (Federation of Fair Trade Conferences; hereinafter abbreviated as the "Fair Competition Code"): "Chocolate (Article 2, paragraph 2), within which "chocolate" processed products in which chocolate dough accounts for 60 percent or more of the total weight" are included (the "percent" referred to above may be regarded as synonymous with "mass%" as used elsewhere in the present specification; the same applies when the Fair Competition Code is referred to hereinafter in the present specification); "Quasi-chocolate" (Article 2, paragraph 3), within which "chocolate processed products in which quasi-chocolate dough accounts for 60 percent or more of the total weight" are included; "Chocolate confectionery" (Article 2, paragraph 4), within which "chocolate processed products in which chocolate dough accounts for less than 60 percent of the total weight" are included; or "Quasi-chocolate confectionery" (Article 2, paragraph 5), within which "chocolate processed products in which quasi-chocolate dough accounts for less than 60 percent of the total weight" are included.

The "water-containing chocolate-like food" of the present invention is particularly preferably a food that satisfies the provision of "Nama chocolate" (Article 4, paragraph 1, item 3(a)) in the "Fair Competition Code," namely, "a product obtained by kneading a water-containing edible material containing cream into chocolate dough, in which the chocolate dough accounts for 60 percent or more of the total weight, the cream accounts for 10 percent or more of the total weight, and the moisture content is 10 percent or more of the total weight," with "cream" (a dairy product) replaced by the oil-in-water emulsion composition of the present invention. In other words, the water-containing chocolate-like food of the present invention is a food that is the same as "nama chocolate," except that it contains the oil-in-water emulsion composition of the present invention instead of "cream" (a dairy product).

"Chocolate dough" refers to a product that satisfies the provision for "Chocolate dough" (Article 3, paragraph 12, item 1) in the "Fair Competition Code," namely, a "product produced using, as raw materials, cocoa mass, cocoa butter, cocoa cake, or cocoa powder prepared from cocoa beans, to which sugars, dairy products, edible oils and fats other than cocoa butter, flavors, and the like are added as necessary, and which is produced through ordinary processes," and which has a "cocoa content of 35 percent or more of the total weight (with cocoa butter accounting for 18 percent or more of the total weight) and a moisture content of 3 percent or less of the total weight (however, milk solids can be used in place of the cocoa content within a range in which the cocoa content is not less than 21 percent of the total weight (with cocoa butter accounting for 18 percent or more of the total weight) and the total of the cocoa content and milk solids is not less than 35 percent of the total weight (with milk fat accounting for 3 percent or more of the total weight))."

"Quasi-chocolate dough" refers to a product that satisfies the provision for "Quasi-chocolate dough" in the "Fair Competition Code," namely, a "product having a cocoa content of 15 percent or more of the total weight (with cocoa butter accounting for 3 percent or more of the total weight), a fat content of 18 percent or more of the total weight, and a moisture content of 3 percent or less of the total weight (excluding those that fall under chocolate dough)" (Article 3, paragraph 12, item 2(a)); or a "product having a cocoa content of 7 percent or more of the total weight (with cocoa butter accounting for 3 percent or more of the total weight), a fat content of 18 percent or more of the total weight, a milk solids content of 12.5 percent or more of the total weight (with milk fat accounting for 2 percent or more of the total weight), and a moisture content of 3 percent or less of the total weight (excluding those that fall under chocolate dough)" (Article 3, paragraph 12, item 2(b)).

The definitions of the terms such as "cocoa mass," "cocoa butter," "cocoa cake," "cocoa powder," "chocolate processed products," "sugars," "dairy products," "edible oils and fats," and "cocoa content" included in the above provisions shall be in accordance with the definitions set forth in the "Fair Competition Code" (Article 2, paragraphs 6 to 9, paragraph 11, and paragraphs 14 to 16).

The content of the oil-in-water emulsion composition can be adjusted while taking into consideration the embodiments of the oil-in-water emulsion composition (in particular, the lauric oil or fat/water ratio) and the effects and the like of the present invention, preferably so as to conform to the above provisions for "Nama chocolate" (cream) and the like; however, in the present invention, the content is, relative to the total amount of the water-containing chocolate-like food, usually in the range of 10 to 45 mass%, preferably 20 to 45 mass%, more preferably 23 to 42 mass%, and most preferably 26 to 42 mass%.

The oil-in-water emulsion composition and the water-containing chocolate-like food are entirely different from each other, and the oil-in-water emulsion composition cannot itself be used as the water-containing chocolate-like food.

The viscosity of the water-containing chocolate-like food is usually 500 cP or more, preferably 1,000 cP or more, more preferably 1,500 cP or more, and most preferably 2,000 cP or more. The viscosity can be measured, for example, at 5°C using a BM-type viscometer (VISCOMETER TV-10) manufactured by Toki Sangyo Co., Ltd., with Rotor No. 2.

Furthermore, the water-containing chocolate-like food is preferably a Bingham fluid, and its yield value is preferably 10 to 500 dyne/cm², more preferably 20 to 400 dyne/cm², and most preferably 50 to 300 dyne/cm². The yield value can be measured, for example, at 40°C using a dynamic mechanical analyzer.

By having the viscosity and yield value within the above ranges, physical properties suitable for a water-containing chocolate-like food are achieved, unlike foaming oil-in-water emulsions such as whipped cream, and favorable shape retention and texture can be obtained.

The content of the oil-in-water emulsion composition in the water-containing chocolate-like food can be calculated from the total amount of all raw materials added in the production process of the water-containing chocolate-like food as described below and the amount of the oil-in-water emulsion composition added therein; however, it can also be measured by analysis using the water-containing chocolate-like food as a sample, for example, in accordance with general methods such as HPLC, GC-MS, and oil and moisture measurement.

It should be noted that the content of the oil-in-water emulsion composition can also be adjusted by taking into consideration the content (A) of lauric oils or fats derived therefrom, the content (B) of water, and the content (a) of oils and fats derived from raw materials other than the oil-in-water emulsion composition in the water-containing chocolate-like food (for example, cocoa butter and other edible oils and fats in the chocolate dough), so that a balance is achieved between the above contents (A) + (a) and the above content (B). As a general tendency, the greater the amount of chocolate dough used as a raw material of the water-containing chocolate-like food, that is, the greater the above content (a), the smaller the content of the oil-in-water emulsion composition becomes (conversely to the content of the chocolate dough), that is, the above contents (A) and (B) become smaller; however, by adjusting the lauric oil or fat/water ratio of the oil-in-water emulsion composition, for example by reducing said ratio, that is, by relatively increasing the amount of water, a balance between the above contents (A) + (a) and the above content (B) can be maintained.

The water-containing chocolate-like food of the present invention may further contain, as necessary and to the extent that the effects of the present invention are not impaired, components other than the oil-in-water emulsion composition of the present invention and the chocolate dough, for example, components contained in general "ganache" or "nama chocolate." Examples of such optional components include preservatives, antioxidants, colorants, flavors, and alcohols (such as spirits). In addition, those listed in the present specification as "emulsifiers" or "optional components" that can be contained in the oil-in-water emulsion composition of the present invention can also be used as optional components of the water-containing chocolate-like food.

The water-containing chocolate-like food of the present invention may be consumed as is, or may be used for secondary applications, for example, in the production of Western confectionery such as muffins, cakes, and cookies, Japanese confectionery such as mochi, ice cream, lacto ice, and the like.

### <Method for Producing Water-Containing Chocolate-Like Food>

The water-containing chocolate-like food of the present invention can be produced by the same production method as a general production method for ganache, "chocolate," "quasi-chocolate," "chocolate confectionery," "quasi-chocolate confectionery," "nama chocolate," and the like except that the oil-in-water emulsion composition of the present invention is used in place of "cream." In general, a step is performed in which the oil-in-water emulsion composition of the present invention is mixed with other raw materials (mainly chocolate dough or quasi-chocolate dough) and then homogenized and emulsified by stirring or the like, and other steps corresponding to the embodiments of the oil-in-water emulsion composition of the present invention, for example, a cooling step for solidification, may be further performed.

### Examples

### [Preparation Example] Preparation of Chocolate Dough

40.00 mass% of cocoa mass (NK Quick Cocoa Mass, manufactured by Nisshin Kako Co., Ltd.), 46.70 mass% of sugar (pure powdered sugar, manufactured by Tomizawa Shouten Inc.), 13.00 mass% of cocoa butter (NK Ghana Cocoa Butter, manufactured by Nisshin Kako Co., Ltd.), and 0.30 mass% of lecithin (SLP-Paste, manufactured by Tsuji Oil Mills Co.,Ltd.) were mixed using a mixer (Kenmix Mixer KM300, manufactured by AICOHSHA MFG. Co., Ltd.), and the mixture was fed into a melanger (ECGC12SLTA, manufactured by Cocoatown) and finely ground to prepare a chocolate dough.

### [Production Example 1] Production of Oil-in-Water Emulsion Compositions 1 to 6

Fully hydrogenated coconut oil (saturated fatty acid content: 100 mass%), an emulsifier (a mixture of sucrose palmitate and sucrose stearate), and sodium bicarbonate (manufactured by FUJIFILM Wako Pure Chemical) were added, mixed, and dissolved so as to achieve the contents shown in Table 1, and water was then further added to bring the total amount to 100 mass%. The resulting liquid was heated to 70°C and homogenized using a high-pressure homogenizer to produce oil-in-water emulsion compositions 1 to 6 for use in water-containing chocolate-like foods.

**[Table 1]**

| Raw materials used | Lauric oil or fat (fully hydrogenated coconut oil) | Emulsifier | Sodium bicarbonate | Water | Lauric oil or fat / Water |
|---|---|---|---|---|---|
| Emulsion composition 1 | 55.00 mass% | 2.20 mass% | 0.020 mass% | 42.78 mass% | 1.285 |
| Emulsion composition 2 | 45.00 mass% | 2.20 mass% | 0.020 mass% | 52.78 mass% | 0.852 |
| Emulsion composition 3 | 35.00 mass% | 1.70 mass% | 0.016 mass% | 63.28 mass% | 0.553 |
| Emulsion composition 4 | 25.00 mass% | 1.20 mass% | 0.011 mass% | 73.79 mass% | 0.338 |
| Emulsion composition 5 | 15.00 mass% | 0.70 mass% | 0.007 mass% | 84.29 mass% | 0.178 |
| Emulsion composition 6 | 5.00 mass% | 0.25 mass% | 0.002 mass% | 94.75 mass% | 0.053 |

### [Production Example 2] Production of Oil-in-Water Emulsion Composition 7

An oil-in-water emulsion composition 7 for use in water-containing chocolate-like foods was produced in the same manner as emulsion composition 3, except that fully hydrogenated coconut oil was replaced with refined coconut oil (saturated fatty acid content: 90 mass%). Emulsion composition 7 exhibited stability comparable to that of emulsion composition 3.

### [Production Example 3] Production of Oil-in-Water Emulsion Compositions 8 to 12 and 14

Oil-in-water emulsion compositions 8 to 12 and 14 for use in water-containing chocolate-like foods were produced in the same manner as emulsion composition 3, except that the emulsifier was changed as shown in Table 2. Emulsion composition 8 to 12 and 14 exhibited stability comparable to that of emulsion composition 3.

**[Table 2]**

| Raw materials used | Lauric oil or fat (fully hydrogenated coconut oil) | Emulsifier | | | | | | Sodium bicarbonate | Water | Lauric oil or fat / Water |
|---|---|---|---|---|---|---|---|---|---|---|
| | | Sucrose fatty acid ester | | | | | Mono glyceride | | | |
| | | S-1670 | P-1670 | S-1170 | S-570 | S-470 | | | | |
| Emulsion composition 8 | 35.00 mass% | 1.50 mass% | | | | | | 0.025 mass% | 63.48 mass% | 0.551 |
| Emulsion composition 9 | 35.00 mass% | | 1.50 mass% | | | | | 0.025 mass% | 63.48 mass% | 0.551 |
| Emulsion composition 10 | 35.00 mass% | | | 1.70 mass% | | | | 0.025 mass% | 63.28 mass% | 0.553 |
| Emulsion composition 11 | 35.00 mass% | | | | 1.70 mass% | | | 0.025 mass% | 63.28 mass% | 0.553 |
| Emulsion composition 12 | 35.00 mass% | | | | | 1.70 mass% | | 0.025 mass% | 63.28 mass% | 0.553 |
| Emulsion composition 14 | 35.00 mass% | | | | | | 1.70 mass% | 0.025 mass% | 63.28 mass% | 0.553 |

The emulsifiers used in Production Example 3 were as follows:
- RYOTO Sugar Ester S-1670 (HLB: 16; sucrose stearate; manufactured by Mitsubishi Chemical Corporation)
- RYOTO Sugar Ester P-1670 (HLB: 16; sucrose palmitate; manufactured by Mitsubishi Chemical Corporation)
- RYOTO Sugar Ester S-1170 (HLB: 11; sucrose stearate; manufactured by Mitsubishi Chemical Corporation)
- RYOTO Sugar Ester S-570 (HLB: 5; sucrose stearate; manufactured by Mitsubishi Chemical Corporation)
- RYOTO Sugar Ester S-470 (HLB: 4; sucrose stearate; manufactured by Mitsubishi Chemical Corporation)
- EXCEL VS-95 (HLB: 3.8; glyceryl monostearate; manufactured by Kao Corporation)

### [Example 1]

Sixty mass% of the chocolate dough obtained in the Preparation Example and 40 mass% of emulsion composition 1 obtained in Production Example 1 were mixed, and the mixture was homogenized and emulsified using a spatula to obtain a water-containing chocolate (ganache)-like food.

### [Example 2]

Sixty-seven mass% of the chocolate dough obtained in the Preparation Example and 33 mass% of emulsion composition 2 obtained in Production Example 1 were mixed, and the mixture was homogenized and emulsified using a spatula to obtain a water-containing chocolate (ganache)-like food.

### [Example 3]

Seventy-two mass% of the chocolate dough obtained in the Preparation Example and 28 mass% of emulsion composition 3 obtained in Production Example 1 were mixed, and the mixture was homogenized and emulsified using a spatula to obtain a water-containing chocolate (ganache)-like food.

### [Example 4]

Seventy-six mass% of the chocolate dough obtained in the Preparation Example and 24 mass% of emulsion composition 4 obtained in Production Example 1 were mixed, and the mixture was homogenized and emulsified using a spatula to obtain a water-containing chocolate (ganache)-like food.

### [Comparative Example 1]

Eighty-three mass% of the chocolate dough obtained in the Preparation Example and 17 mass% of water were mixed, and the mixture was homogenized and emulsified using a spatula to obtain a water-containing chocolate (ganache)-like food.

### [Comparative Example 2]

Seventy mass% of the chocolate dough obtained in the Preparation Example and 30 mass% of fresh cream (Special Selection Hokkaido Pure Cream 35, manufactured by Takanashi Milk Products Co., Ltd.) were mixed, and the mixture was homogenized and emulsified using a spatula to obtain a water-containing chocolate-like food (general ganache).

### [Comparative Example 3]

Seventy-eight mass% of the chocolate dough obtained in the Preparation Example and 22 mass% of emulsion composition 5 obtained in Production Example 1 were mixed, and the mixture was homogenized and emulsified using a spatula to obtain a water-containing chocolate (ganache)-like food.

### [Comparative Example 4]

Eighty mass% of the chocolate dough obtained in the Preparation Example and 20 mass% of emulsion composition 6 obtained in Production Example 1 were mixed, and the mixture was homogenized and emulsified using a spatula to obtain a water-containing chocolate (ganache)-like food.

### <Evaluation of Physical Properties, Texture, and Taste>

The physical properties (shape retention), texture (melt-in-the-mouth and bite), and taste (sweetness and body) of the resulting water-containing chocolate-like foods of Examples 1 to 4 and Comparative Examples 1, 3, and 4, which were stored under refrigeration, were evaluated on a three-grade scale based on the following evaluation criteria, in comparison with the water-containing chocolate-like food of Comparative Example 2 (general ganache). The evaluation results are shown in Table 3. If the rating was A or B, it was judged to have the characteristics of ganache. Examples 1 to 4 using emulsion compositions 1 to 4 of the present invention exhibited favorable shape retention and sweetness that were equivalent or superior to those of general ganache. Examples 1 to 4 using emulsion compositions 1 to 4 of the present invention further exhibited favorable melt-in-the-mouth feel, bite, and body that were equivalent or superior to those of general ganache.

### • Evaluation Criteria for Shape Retention

A: Equivalent to Comparative Example 2
B: Slightly softer than Comparative Example 2
C: Unable to retain a ganache-like shape

### • Evaluation Criteria for Melt-in-the-Mouth Feel

A: Smoother than Comparative Example 2
B: Equivalent to Comparative Example 2
C: Rougher than Comparative Example 2

### • Evaluation Criteria for Bite

A: Equivalent to Comparative Example 2
B: Softer than Comparative Example 2
C: Harder than Comparative Example 2

### • Evaluation Criteria for Sweetness

A: Equivalent to Comparative Example 2
B: Sweeter than Comparative Example 2
C: Less sweet than Comparative Example 2

### • Evaluation Criteria for Body

A: More body perceived than Comparative Example 2
B: Equivalent to Comparative Example 2
C: Less body perceived than Comparative Example 2

**[Table 3]**

| | Content | | Evaluation | | | | |
|---|---|---|---|---|---|---|---|
| | Chocolate dough | Emulsion composition or control | Shape retention | Melt-in-the-mouth | Bite | Sweet ness | Body |
| Example 1 | 60 mass% | 1 | A | B | A | A | B |
| | | 40 mass% | | | | | |
| Example 2 | 67 mass% | 2 | A | A | A | A | A |
| | | 33 mass% | | | | | |
| Example 3 | 72 mass% | 3 | A | A | A | A | A |
| | | 28 mass% | | | | | |
| Example 4 | 76 mass% | 4 | B | B | A | A | B |
| | | 24 mass% | | | | | |
| Comparative Example 1 | 70 mass% | Water | C | C | C | B | C |
| | | 30 mass% | | | | | |
| Comparative Example 2 | 70 mass% | Fresh cream | - | - | - | - | - |
| | | 30 mass% | | | | | |
| Comparative Example 3 | 78 mass% | 5 | B | C | C | B | C |
| | | 22 mass% | | | | | |
| Comparative Example 4 | 80 mass% | 6 | B | C | C | B | C |
| | | 20 mass% | | | | | |

### [Examples 7 to 12]

The water-containing chocolate (ganache)-like foods shown in Table 4 were obtained in the same manner as in Example 3, except that emulsion compositions 8 to 12 and 14 were used.

The physical properties (shape retention), texture (melt-in-the-mouth and bite), and taste (sweetness and body) of the water-containing chocolate-like foods of Examples 7 to 12 stored under refrigeration after preparation were evaluated based on the evaluation criteria described above. The evaluation results are also shown in Table 4. Examples 7 to 12 using emulsion compositions 8 to 12 and 14 of the present invention exhibited favorable shape retention, melt-in-the-mouth feel, and bite that were equivalent or superior to those of general ganache. Examples 7 to 11 using emulsion compositions 8 to 12 of the present invention further exhibited favorable sweetness and body that were equivalent or superior to those of general ganache.

**[Table 4]**

| | Content | | Evaluation | | | | |
|---|---|---|---|---|---|---|---|
| | Chocolate dough | Emulsion composition | Shape retention | Melt-in-the-mouth | Bite | Sweet ness | Body |
| Example 7 | 72 mass% | 8 | A | A | A | A | A |
| | | 28 mass% | | | | | |
| Example 8 | 72 mass% | 9 | A | A | A | A | A |
| | | 28 mass% | | | | | |
| Example 9 | 72 mass% | 10 | A | A | A | A | A |
| | | 28 mass% | | | | | |
| Example 10 | 72 mass% | 11 | A | A | A | A | A |
| | | 28 mass% | | | | | |
| Example 11 | 72 mass% | 12 | A | A | A | A | A |
| | | 28 mass% | | | | | |
| Example 12 | 72 mass% | 14 | A | A | A | B | C |
| | | 28 mass% | | | | | |

## Claims

1. An oil-in-water emulsion composition comprising an emulsifier, a lauric oil or fat in which the content of lauric acid in the constituent fatty acids is 30 mass% or more, and water,
wherein the mass ratio of the lauric oil or fat to water (lauric oil or fat/water) is in the range of 0.300 to 1.400, and
the composition does not contain dairy components.

2. The oil-in-water emulsion composition according to claim 1, wherein the mass ratio of the lauric oil or fat to water (lauric oil or fat/water) is in the range of 0.500 to 1.400.

3. The oil-in-water emulsion composition according to claim 1, wherein the oil-in-water emulsion composition is for use in a water-containing chocolate-like food.

4. The oil-in-water emulsion composition according to claim 1, wherein the protein content is 1.0 mass% or less.

5. The oil-in-water emulsion composition according to claim 1, wherein the emulsifier contains at least one of sucrose fatty acid esters, monoglycerides, organic acid monoglycerides, polyglycerol fatty acid esters, polyoxyethylene sorbitan fatty acid esters (polysorbates), and stearoyl lactylates.

6. The oil-in-water emulsion composition according to claim 1, wherein the emulsifier is present in an amount of 0.01 to 20.00 mass% based on the total oil-in-water emulsion composition.

7. The oil-in-water emulsion composition according to claim 1, wherein the emulsifier is a sucrose fatty acid ester having an HLB of 2 to 18.

8. The oil-in-water emulsion composition according to claim 1, wherein the proportion of the lauric oil or fat in the total oils and fats is 50 mass% or more.

9. A water-containing chocolate-like food comprising the oil-in-water emulsion composition according to claim 1 in the range of 10 to 45 mass%.

10. The water-containing chocolate-like food according to claim 9, wherein the viscosity at 5°C is 500 cP or more.
